# EUROPEAN PATENT APPLICATION

(11) **EP 4 796 464 A1**
(43) Date of publication of application: **26.08.2026**
(21) Application number: 25159166.5
(22) Date of filing: 20.02.2025
(51) Int. Cl.: B65G 1/04, B65G 1/137

(54) **A PORT**

(71) Applicant: AutoStore Technology AS, 5578 Nedre Vats (NO)
(72) Inventor: JAKOBSEN, Jonas Neraal, 5578 Nedre Vats (NO)
(74) Representative: Kilburn & Strode LLP

(57) **Abstract**

The disclosure relates to a port for an automated storage and retrieval system, the port comprising: one or more drop positions for receipt of respective storage containers from a storage grid of the automated storage and retrieval system; a conveyor comprising a buffer position and a presentation position and configured to transport the storage containers between the buffer position and the presentation position, wherein the storage containers are accessible to a user when at the presentation position; and a container transfer means configured to: transport a first storage container of the storage containers from a first drop position of the one or more drop positions to the presentation position; and transport a second storage container of the storage containers from the first drop position to the buffer position.

## Description

### TECHNICAL FIELD

The disclosure relates to a port. More particularly, it relates to a port for an automated storage and retrieval system, and a method for the transport of storage containers in a port of an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The ports or stations are capable of receiving a container from a container-handling vehicle, presenting the container to a user, and then returning the container to the container-handling vehicle to deliver back to the grid.

One known port is configured to present a single storage container to a user at a time. Before the port can receive the next container, the presented container must be returned to the grid. Such an arrangement can limit the efficiency and speed at which containers can be presented to the user by restricting the port to handling one container at a time.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5a shows a perspective view of a first port suitable for use in the system of Fig. 1;
Fig. 5b shows a perspective view of a second port for use in the system of Fig. 1;
Fig. 5c shows a plan view of a third port suitable for use in the system of Fig. 1;
Fig. 6 shows a flowchart depicting a first method for transporting storage containers suitable for use with the port of any of Figs 5a-c;
Fig. 7 shows a flowchart depicting a second method for transporting storage containers suitable for use with the port of any of Figs 5a-c.

### DETAILED DESCRIPTION

In overview, the disclosure relates to a port which can transport, using a container transfer means, a storage container from a drop position in which it receives the storage container to either a first or second position on a conveyor. In the first position on the conveyor, the storage container is accessible to a user. In the second position on the conveyor, the container is inaccessible to the user, but is readily available to be moved by the conveyor into the presentation position. That is to say, the conveyor can move a storage container between the first and second positions. By allowing the port to flexibly transport the storage container directly to either the first or second position on the conveyor from the drop position, the efficiency and speed of transport of storage containers within the port is improved. Further, by including a conveyor with multiple positions, each position capable of holding a storage container, the port is not bound to a one-to-one relationship between a robot delivering a container and a container being presented to a user. That is to say, storage containers can be sequenced for presentation within the port as opposed to at the grid. For example, a container may be moved between the first and second positions multiple times as to present the container to the user on multiple separate occasions. By allowing the container to be presented multiple times without leaving the port and/or sequencing containers within the port, storage containers can be presented to a user quicker and more efficiently as the port does not have to repeatedly wait to receive/return the container to/from the grid.

There are multiple routes the containers can take through the port, either directly from the drop position to the first position, or indirectly from the drop position to the second position to the first position. This enables the delivery of containers to the port by the robot to be decoupled from the presentation of containers at the port. The port, by removing the one-to-one relationship between the container delivery by the robot and the container presentation, enables the time robots spend queuing for the port to be reduced, thereby increasing the efficiency of the port and the automated storage and retrieval system as a whole.

### Automated storage and retrieval system overview

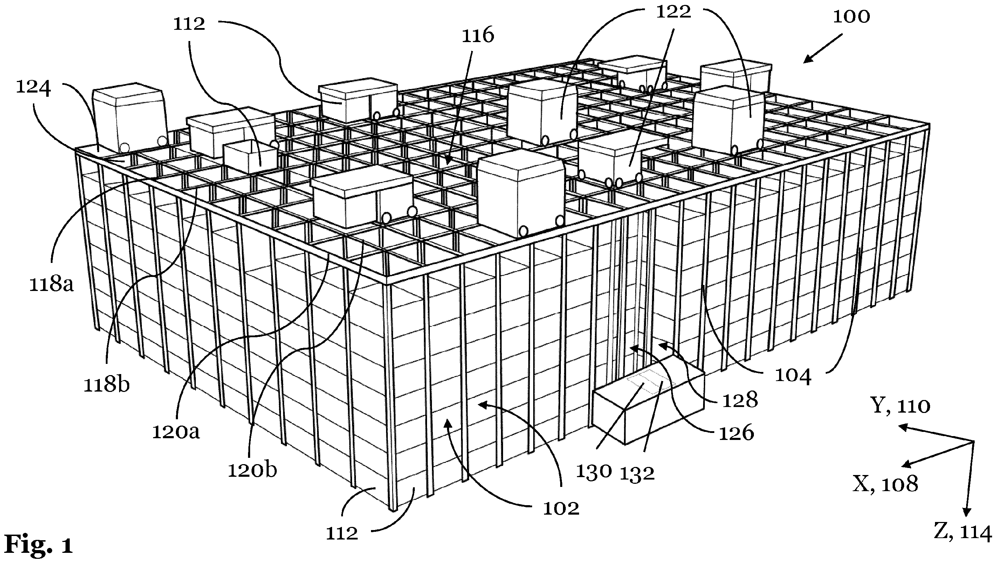

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

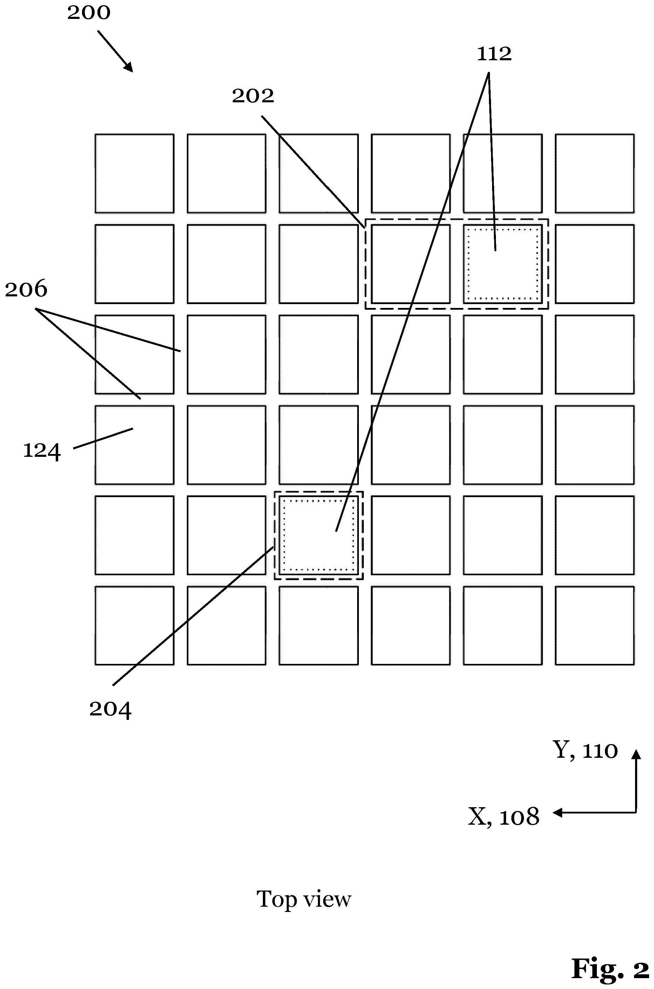

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

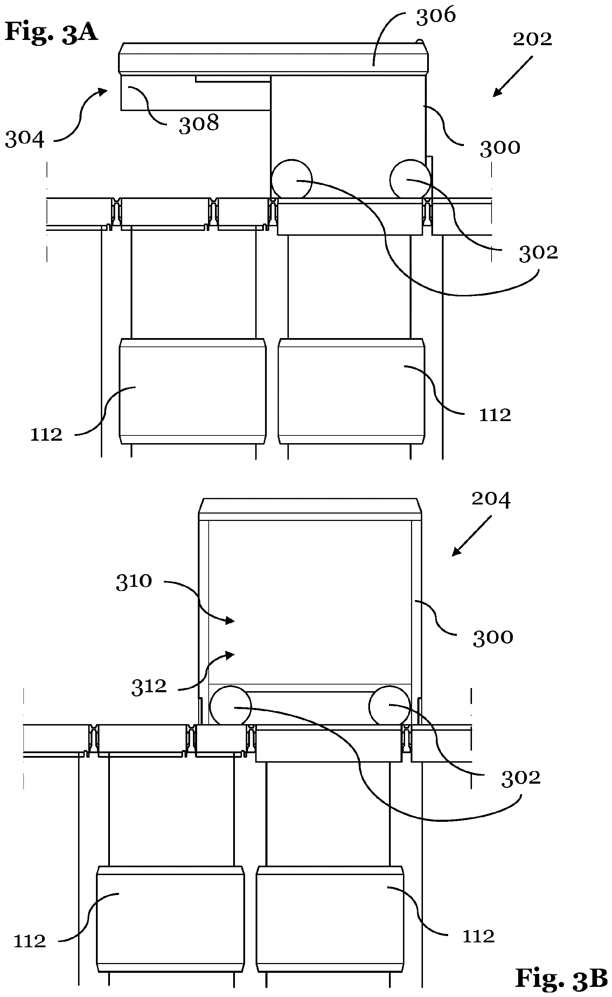

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

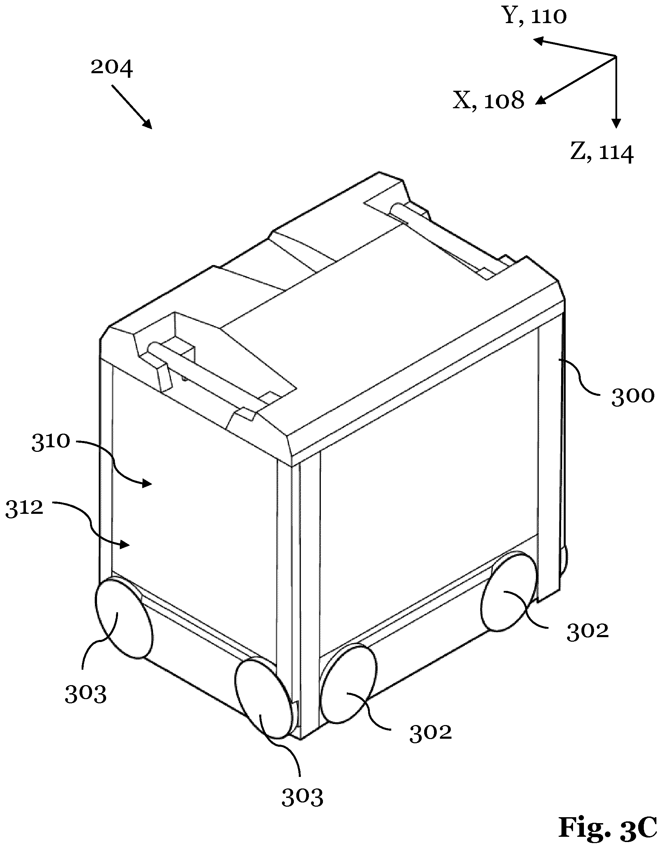

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

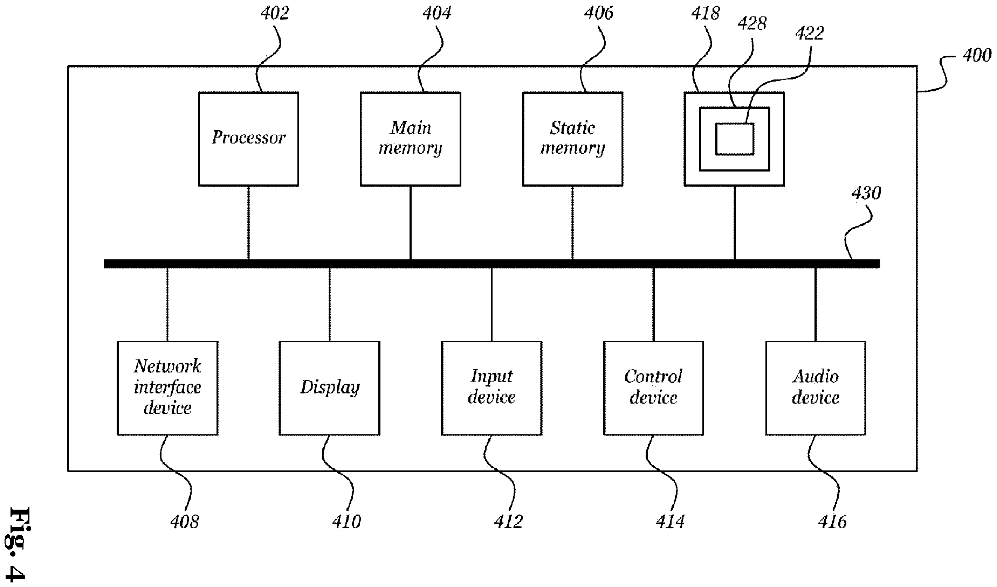

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

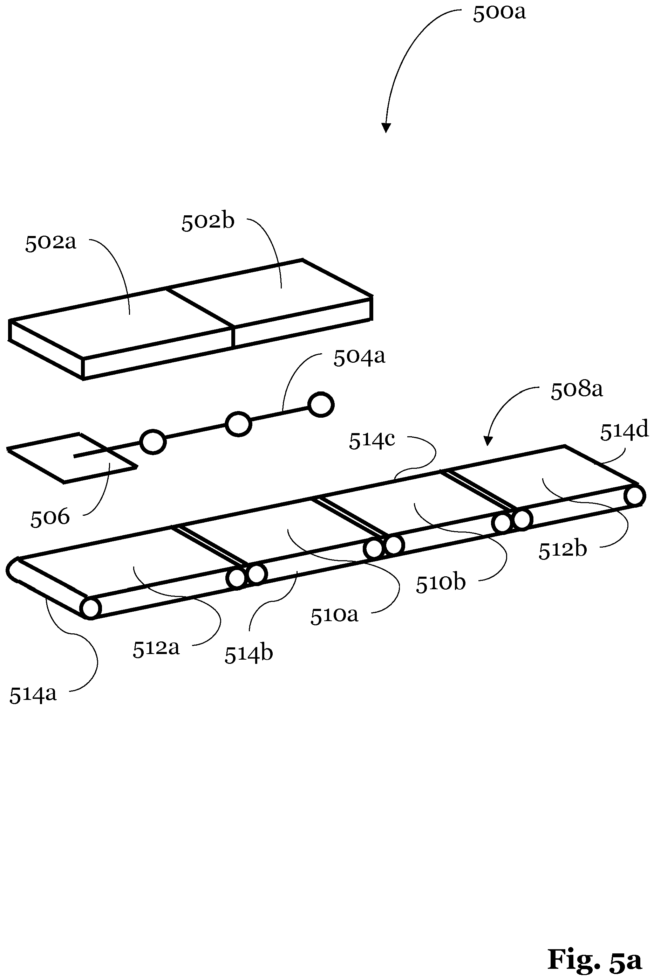

With reference to Fig. 5a, a first embodiment of a port 500a will now be described. The port 500a is suitable for operation with the automated storage and retrieval system of Fig.1, for example, the port 500a can be used in place of port 130, 132 described with reference to Fig. 1. The port 500a can comprise one or more drop positions 502, container transfer means 504 and a conveyor 508a.

Each of the one or more drop positions 502 is a position for the receipt of a storage container 112 from a storage grid 100 of an automated storage and retrieval system. Each drop position 502 is a position in which a storage container 112 is accessible to the transfer means 504. Each drop position 502 can be configured such that a storage container 112 can be returned to the grid 100. Each drop position 502 can be directly below a port-column 126, 128 and can be configured to receive and/or return a storage container 112 via the port column 126, 128. The storage container 112 can be received and/or returned via a robot, such as the robot 202, 204 of Fig. 2. The robot 202 may grip the storage container 112 and lift and/or lower it using a lifting device 304, 312 to and/or from the drop position 502. The drop position 502 may be a position on a conveyor configured to move the container in and out of a port column 128, 128. The drop position 502 may be a position on a shelf, rail, track, panel, or any surface capable of holding a storage container 112. Although the port 500a is shown with two drop positions 502a-b, this is not intended to be limiting, the port 500a can comprise any number of drop positions 502, for example, one, three, four or five drop positions. eEach drop position 502 is accessible to the transfer means 504 and can receive a storage container 112 from the grid 100. Although the drop positions 502a-b in Fig. 5a are shown as laterally adjacent, this representation is illustrative only. The present disclosure encompasses embodiments where the drop positions are physically separate. In some embodiments, the distance between each drop position 502 may exceed one grid column 100, while in other embodiments, it may be less than one grid column 100. The drop positions 502 of a port 500a may be equidistant from each other.

The transfer means 504 are configured to transport storage containers between the drop positions 502 and the conveyor 508a. For example, the transfer means are configured to transport a storage container 112 from a first drop position 502a to a first presentation position 510a on the conveyor 508a and to transport a storage container 112 from the first drop position 502a to a first buffer position 512a on the conveyor 508. In some embodiments, the transfer means 504 can transport a storage container between any of the one or more drop positions 502 and any position on the conveyor 508a. This may include transporting the storage container from the respective drop position 502 to the respective position on the conveyor 508a, and transporting the storage container in the reverse direction from the respective position on the conveyor 508a to the respective drop position 502. For example, the transfer means can be configured to transport a storage container 112 from the first drop position 502a to a second presentation position 510b on the conveyor 508a, from the first drop position 502a to a second buffer position 512b on the conveyor 508a, from the second presentation position 510b to the first drop position 502a, etc. The transfer means 504 can be configured to move a storage container 112 between any of the positions on the conveyor 508a. For example, the transfer means 504 can be configured to move a storage container from the second presentation position 510b to the first buffer position 512a, from the first buffer position 512a to the second buffer position 512b, from the first presentation position 510a to the first buffer position 512b etc. The transfer means 504 may also be referred to as a container transfer means or a container transfer device.

As shown in Fig. 5a, in one example embodiment the transfer means 504 can comprise a mechanical arm. The transfer means 504 can comprise a three point articulated mechanical arm. Providing a three point articulated mechanical arm can provide enhanced flexibility and movement precision enabling a wider range and/or area of operational accessibility. The mechanical arm may be any standard mechanical arm known in the art suitable for transporting storage containers 112. The mechanical arm may be telescopic and comprise extendable sections. The mechanic arm may be a polar arm, delta arm and/or any appropriate articulated arm. The mechanical arm may comprise an engagement device 506. The engagement device can be configured to engage and/or hold a storage container 112. The engagement device 506 may be positioned at the end of the mechanical arm. The engagement device may comprise gripping jaws, a suction gripper, a vacuum griper, a clamp, a hook gripper, a latch gripper, a snap fit connector, a supporting panel. The engagement device 506 may be configured to engage with and/or support the underside of a storage container 112. The engagement device 506 may be configured to engage with and/or hold an upper portion of the storage container 112. The engagement device 506 may be shaped and configured to engage with one or more engagement features (e.g. protrusions or recesses) of the storage container. The base of the mechanical arm can be fixedly mounted or movably mounted such that the mechanical arm can move within the port in order to increase the area it is able to access. The transfer means 504 may comprise more than one mechanical arm. Each mechanical arm 504 in the port 500 can be controlled by a common controller, such as control system 400 of Fig. 4, to avoid collisions.

The container transfer means 504 may be configured to place a container on the conveyor 508a by positioning the engagement device 506 holding the container above the conveyor 508a and releasing/disengaging with the container. The engagement device 506 with a container supported thereon may be positioned adjacent to the conveyor 508a, and the engagement device 506 may be tilted to cause the container to slide onto the conveyor, or the engagement device 506 may comprise an actuator configured to push the container onto the conveyor 508a.

The conveyor 508a comprises a buffer position 512a and a presentation position 510a. The conveyor 508a is configured to transport storage containers 112 between the buffer position 512a and the presentation position 510a. When a storage container is in a presentation position 510, the storage container 112 is accessible to a user. When a storage container 112 is in a presentation position 510, the storage container 112 may be accessible via an access opening in the port. The access opening may comprise a hinged, sliding, detachable, motorized and/or automated access hatch. An access opening may be positioned above each of the one or more presentation positions 510. The access opening may be positioned on the port 500a such that the user can access one or more product items stored in the storage containers 112 in the presentation positions 510. When a storage container 112 is in a buffer position 512 on the conveyor 508a, it is not accessible to a user. When the container 112 is in the buffer position 512 on the conveyor 508a, it may be within an internal compartment of the port 508a. That is to say, the port 500a can comprise an external framework or housing (not pictured) which can house or enclose the conveyor 508a; the access opening can be positioned on the external framework to allow access to storage containers 112 in a presentation position 510, and storage containers 112 in a buffer position 512 can be held within an internal compartment formed at least in part by the external structure. The external framework may prevent access to the internal compartment of the port 500a except via the access opening.

The conveyor 508a can be a single conveyor 508a or can be made up of a plurality of conveyor components or conveyor panels 514. Each conveyor panel 514 of the plurality of conveyor panels 514 can operate independently of the rest of the conveyor 508a and/or each conveyor panel 514 can coordinate its operation with the rest of the conveyor 508a. The conveyor panels 514 being configured to operate independently of each other may comprise a first subset of the conveyor panels 514 configured to implement a different direction of movement to a second subset of the conveyor panels 514, and/or a first subset of the conveyor panels 514 being configured to implement movement while a second subset of the conveyor panels 514 remain stationary. This may provide a further increase in the flexibility of sequencing of the storage containers within the port 500a. For example, the conveyor panels 514a and 514b may be configured to move a storage container from the first buffer position 512a to the first presentation position 510a without causing or requiring movement of a container in the second buffer position 512b (through the conveyor panel 514d remaining stationary). Each conveyor panel 514 may comprise a bi-directional, multi-directional, omnidirectional and/or reversible conveyor. Each conveyor panel 514 may be operationally aligned such that a storage container can be transported between each of the conveyor panels 514. That is to say, the conveyor panels 514a-d can be operationally aligned such that a storage container can be moved to any position on the conveyor 508a.

The conveyor 508a may comprise a belt supported/coupled to a plurality of drums. The belt may be configured to support the storage containers thereon. Rotation of the drums may cause the belt to rotate, thereby causing containers supported on the belt to move along the length of the conveyor 508a. The conveyor 508a may comprise a motor configured to drive rotation of the drums. The conveyor 508a may comprise a controller configured to control the motor. Where the conveyor 508a comprises a plurality of conveyor panels 514, each of the conveyor panels 514 may comprise a respective instance of the components mentioned above in respect of the conveyor 508a. When implemented as an omnidirectional conveyor 508, the conveyor 508 may comprise a plurality of wheels or rollers protruding from an upper surface of the conveyor 508. The plurality of wheels or rollers may be driven to rotate in different directions by a plurality of motors under control of a controller of the conveyor 508. The wheels or rollers may contact a container disposed on the conveyor 508 and may be operated to move the container in a selected direction through a corresponding direction of rotation of the wheels or rollers.

Any of the controller(s) of the conveyor 508a, the controller of the transfer means 504a, a controller of the port 500a, a controller of the access hatch and/or controllers of the robots may be communicatively coupled to any others of these controllers. This coupling may be via a controller of the overall automated storage and retrieval system. The controllers may be configured to transmit and receive status updates and/or control signals in order to coordinate movement of the storage containers through the system.

In the embodiment shown in Fig. 5a, the conveyor 508a comprises four conveyor panels 514a-d, wherein each conveyor panel 514 is associated with a single respective position on the conveyor 508a and configured to support thereon a single respective storage container. The first buffer position 512a is positioned on conveyor panel 514a, the first presentation position 510a is positioned on the conveyor panel 514b, the second presentation position 510b is positioned on the third conveyor panel 514c and the second buffer position is positioned on conveyor panel 514d. Although the conveyor 508a is only shown to comprise two presentation positions 510 and two buffer positions 512, the present disclosure comprises embodiments with other number of presentation positions 510 and buffer positions 512. Conveyor 508a is shown to comprise four conveyor panels 514 but it can comprise any number of conveyor panels required, that is to say the conveyor 508a can comprise a conveyor panel 514 for each presentation position 510 and buffer position 512 required on the conveyor 508a. The port can comprise the same number of drop positions 502 as it does presentation positions 510 and buffer positions 512. The port can comprise the same number of presentation positions 510 as it does buffer positions 512, but it may have a different number of drop positions 502. The port can comprise a different number of buffer positions 512 than it has presentation positions 510; for example, more presentation positions 510 than buffer positions 510 or more buffer positions 512 than presentation positions 510. Although Fig.5a arranges the presentation positions 510 laterally adjacent to each other and the buffer positions 510 laterally adjacent to each of the presentation positions 510, any arrangement where storage containers in the presentation positions 510 are accessible to a user and inaccessible when in the buffer position 512 are intended to be covered by the scope of the present disclosure. For example in one embodiment the first presentation position 510a can be positioned on the first conveyor panel 514a, the second presentation position 510b can be positioned on the second conveyor panel 514b, the first buffer position 512a can be positioned on the third conveyor panel 514c and the second buffer position 512b can be positioned on the fourth conveyor panel 514d. The port 500a may be arranged such that at least one presentation position 510 is adjacent to at least one buffer position 512, which may increase the efficiency of movement of containers through the port 500a. The conveyor 508a may operate in communication with the container transfer means 504 in order to move the container between the container transfer means 504 and the conveyor 508a. For example, the conveyor 508a may transport a container towards and/or away from the container transport means 504.

Using the components described above, the port 500a may be configured to move a first container between a drop position 502 and a presentation position 510 without the container passing through any of the one or more buffer positions 512. This may be performed by the container transfer means 504a. The port 500a may be configured to move a second container between a drop position 502 and a buffer position 510 using the container transfer means 504, and between the buffer position 510 and a presentation position 512 using the conveyor 508. In other words, the port 500a provides multiple different routes via which the storage containers can be moved through the port 500a. The ability to selectively implement the different movement routes for the different storage containers increases the flexibility of the port 500a, e.g. through enabling sequencing within the port 500a and temporary storage within the port 500a without disrupting the continued delivery of containers to the presentation position(s) 510.

A buffer position 512 as described herein may be referred to as a storage position or a temporary storage position. The buffer position 512 may be dimensioned to accommodate a storage container for (temporary) storage such that other containers can continue to be moved between the drop position 502 and the presentation position 510 while the container remains in the buffer position 512. The buffer position 510 may have a corresponding size/footprint to the size/footprint of a container. Using the conveyor 508a, a container may be transported between the buffer position 512 and the presentation position 510 without the container passing through any of the one or more drop positions 502.

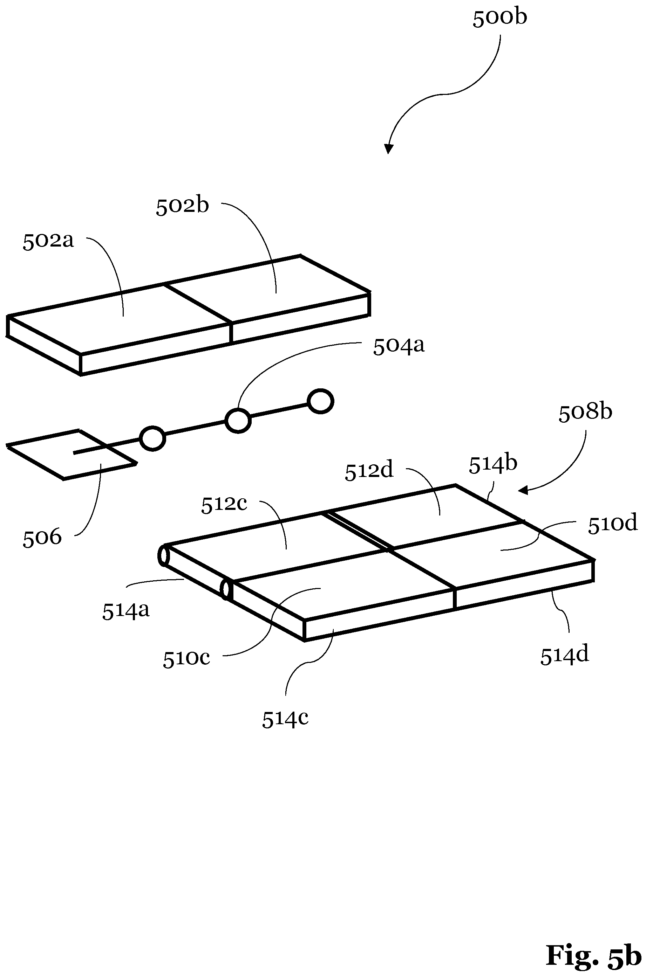

Fig.5a shows a port 500a wherein each of the positions on the conveyor 508a are laterally disposed. The conveyor 508a may be arranged such that the positions are disposed adjacent to each other in a line which is parallel to a direction in which the conveyor 508a is configured to move. The conveyor 508a may be arranged such that the positions are disposed adjacent to each other in a line parallel to a wall of the storage grid 100, e.g. may be oriented in the X-direction 108 as depicted in Fig. 1. Fig. 5b shows a port 500b which is the same as port 500a described with reference to Fig. 5a except for the fact it shows conveyor 508b wherein the buffer positions 512 are positioned between the drop positions 502 and the presentation positions 510. In the example shown in Fig.5b, conveyor panels 514a, b can be bidirectional conveyor panels 514 and conveyor panels 514c, d can be omnidirectional conveyor panels 514, however any appropriate selection of conveyor panel 514 type can be made for each conveyor panel 514 of the conveyor 508 in order to facilitate transport between positions. Arranging the buffer positions 512 behind the presentation positions 510 can ensure access to storage containers 112 in the presentation position 510 is not obstructed. Fig.5b shows that conveyor panels 514 can be laterally or longitudinally adjacent to each other in order to form conveyor 508. Fig. 5b shows a conveyor 508b wherein every buffer position 512 is positioned between the drop positions 502 and the presentation positions 510, but the present disclosure includes embodiments in which the conveyor panels 514 are arranged in any number of ways. For example, a conveyor 508 could comprise two laterally adjacent presentation positions 510 and each presentation position 510 could also be laterally adjacent to a first buffer position 512, and longitudinally disposed from a second buffer position 512 positioned on a conveyor panel 514 positioned between the drop positions 502 and the presentation positions 510. Each conveyor panel 514 can comprise a bi-directional or omnidirectional conveyor as required to facilitate movement between the plurality of positions on the conveyor 508.

Figs.5a-5b show ports 500a, 500b with a transfer means 504 comprising a mechanical arm, however other transfer means are intended to be included in the present disclosure. For example, autonomous guided vehicles, conveyors, autonomous mobile robots, container handling vehicles such as those described with reference to Figs.2, 3, cranes, hoists and/or roller tables. The transfer means 504 described herein is distinct from, i.e. is a different component to, the conveyor 508 described herein. The respective form and function of each of these components is different as described herein. In other words, the component (i.e. the conveyor 508) of the port 500a configured to transport a container between the buffer position 512 and the presentation position 510 is distinct from the component (i.e. the container transfer means 504) of the port 500a configured to transport a container between the drop position 502 and the presentation position 510/the buffer position 512.

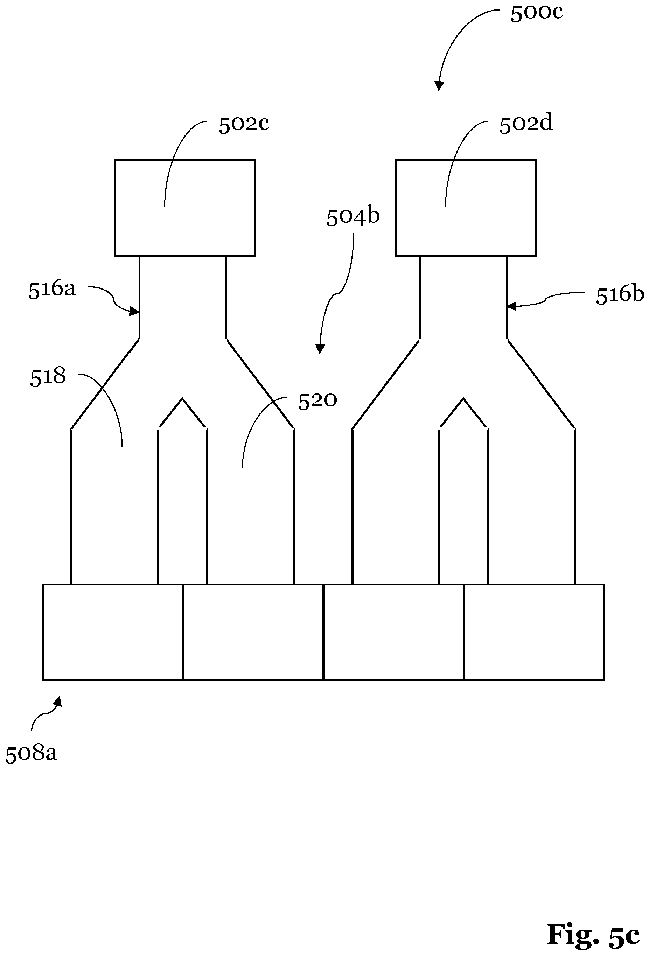

Fig.5c shows a port 500c which is the same as port 500a described with reference to Fig. 5a except for the fact it shows a transfer means 504b which comprises a transport conveyor system 516. The transport conveyor system 516 can comprise a first transport conveyor 518 configured to transport a storage container 112 between a drop position 502 and the presentation position 510 and a second transport conveyor 520 configured to transport a storage container 112 between a drop position 502 and a buffer position 512. The conveyor system can comprise a diverter, a switching gate and/or a redirection mechanism to direct a storage container to a presentation position 510 or a buffer position 512. The transport conveyor system can comprise a bi-directional, multi-directional, omnidirectional, sorting, diverting, discharge, trap-door, chute-diverter, mechanical pusher, tilt-tray, gravity drop, pop-up wheel, belt deflector and/or right-angle transport conveyors and/or transfer conveyor panels. The container transfer means 504b can comprise a transport conveyor system for each drop position 502. For example, the container transfer means 504b shown in Fig.5c shows a first transport conveyor system 516a for transport between a first drop position 502a and the conveyor 508a, and a second transport conveyor system 516b for transport between a second drop position 502b and the conveyor 508b. Although the transport conveyor system 516a, b is shown to diverge into two transport conveyors 518, 520, the present disclosure includes transport conveyor systems 516 that diverge into any number of transport conveyors. Although port 500c comprises the conveyor 508a described with reference with to Fig. 5a, the container transfer means 504c of port 500c could also be used with the conveyor 508b of Fig. 5b, or any other conveyor 508 described within the present disclosure. The transport conveyor systems 516 may each comprise a respective plurality of conveyor panels 514 as described in relation to Fig. 5a.

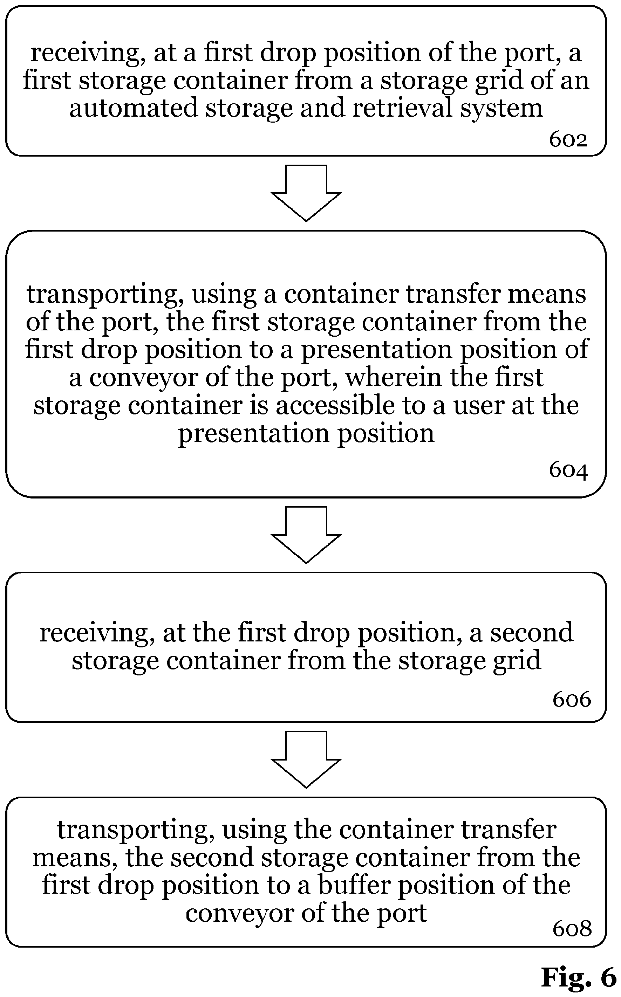

Fig.6 shows a method 600 for transporting storage containers 112 in a port of an automated storage and retrieval system. The port may be as described with reference to any of the ports 500a-c of Figs 5a-c. The automated storage and retrieval system may be the automated storage and retrieval system described with reference to Fig. 1. A port may be controlled to perform the method 600 by a control system, such as the control system 400 described with reference to Fig.4. The present disclosure further comprises a computer-readable medium comprising instructions which, when executed on one or more processors, cause a port of an automated storage and retrieval system to perform the method 600.

At step 602 of method 600, the method comprises receiving, at a first drop position 502a of a port 500, a first storage container 112 from a storage grid 100 of an automated storage and retrieval system. The first storage container 112 may be received via a port column 126, 128 of the automated storage and retrieval system. The first storage container 112 may be retrieved from the grid 100 by a container handling vehicle, such as the container handling vehicle shown in Figs.2-3. The first storage container 112 can be associated with and/or received in response to one or more customer orders comprising one or more product items stored in the first storage container.

At step 604 of method 600, the method comprises transporting, using a container transfer means 504 of the port 500, the first storage container 112 from the first drop position 502a to a presentation position 510a of a conveyor 508 of the port 500, wherein the first storage container 112 is accessible to a user at the presentation position 510. Transporting the first storage container 112 from the first drop position 502a to a presentation position 510a can comprise moving the container with a conveyor at the first drop position 510a towards the container transfer means 504.

At step 606 of method 600, the method comprises receiving, at the first drop position 502a, a second storage container 112 from the storage grid 100. The second storage container 112 can be received at the first drop position 502a in substantially the same manner as described for the first storage container received in step 602 discussed above.

At step 608 of method 600, the method comprises transporting, using the container transfer means 504, the second storage container 112 from the first drop position 502a to a buffer position 512a of the conveyor 508 of the port 500. The second storage container 112 can be transported from the first drop position 502a to the buffer position 512a in substantially the same manner as described for the first storage container in transporting step 604 discussed above. The conveyor 508 may transport the second storage container from the buffer position 512a to the presentation position 510a, or to another presentation position 510b.

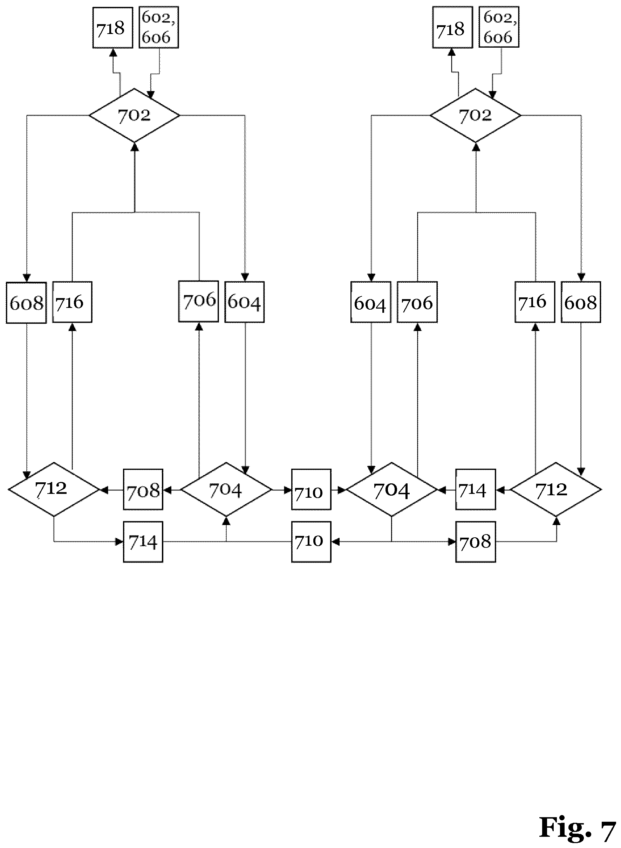

Fig.7 shows a method 700 for transporting storage containers 112 in a port of an automated storage and retrieval system. The port may be as described with reference to any of the ports 500a-c of Figs 5a-c. The automated storage and retrieval system may be the automated storage and retrieval system described with reference to Fig. 1. A port may be controlled to perform the method 700 by a control system, such as the control system 400 described with reference to Fig.4. The present disclosure further comprises a computer-readable medium comprising instructions which, when executed on one or more processors, cause a port of an automated storage and retrieval system to perform the method 700. The method 700 can comprise the steps of method 600. The method steps of method 600 can further include any number of the operations of method 700. That is to say, the features of method 700 and method 600 can be readily combined.

The operations labelled 602-608 in Fig. 7 are as described in their namesake equivalent steps in Fig. 6 discussed above.

At step 702 of method 700, the method can comprise determining whether to transport a storage container 112 received at a drop position 502 via any of steps 602, 606, 706, 716 to a buffer position 512a or a presentation position 510a on the conveyor 508, or to the grid 100. Step 702 can be performed in response to any of steps 602, 606, 706, 716. Determining whether to transport a storage container 112 to a buffer position 512 or a presentation position 510 on the conveyor 508 can be performed in response to step 602 or step 606. Determining whether to transport a storage container 112 to a buffer position 512 or a presentation position 510 on the conveyor 508 can be based at least in part on the position of any storage containers 112 already on the conveyor 508. For example, if the first container 112 is in the first presentation position 510a being accessed by a user, it may be determined that the second storage container 112 is to be transported to the first buffer position 512a. Determining whether to transport a storage container 112 to a buffer position 512 or a presentation position 510 on the conveyor 508 can be based at least in part on a user input, optionally a user input received at a control system 400, configured to control the operation of the port 500. Determining whether to transport a storage container 112 to a buffer position 512 or a presentation position 510 on the conveyor 508 can be based at least in part on a queue of customer orders. For example, a storage container storing a product item in a customer order at the front of the queue may be determined to be transported to the first presentation position, whereas a second storage container associated with a customer order not at the top of the queue may be placed in a buffer position 512. The determining may be performed by a processor or control system in the port and/or a control system for the AS/RS such as the control system described with reference to Fig.4. If it is determined the storage container 112 should be transported to a buffer position 512, the method proceeds to operation 608. If it is determined the storage container 112 should be transported to a presentation position 510, the method proceeds to operation 604.

At step 702 of method 700, the method can further comprise determining whether to return a storage container 112 received at a drop position 502 via any of operations 602, 606, 706, 716 to the grid 100. If the storage container has been received via operations 716 or 706, it may be determined in response that the storage container should be returned to the grid 100. The determination can be based on whether the conveyor 508 is full, that is to say there is currently no empty presentation and/or buffer position on the conveyor 508 to transport a storage container to. The determination can be based on user input. The determination can be based on a verification check of the storage container and/or the product items stored in the storage container. The verification check can be based on: image data, for example from a camera at the drop position 502; 3d map data and/or scan data from LiDAR and/or any appropriate vision means at the drop position 502; weight data from weighing means at the drop position 502; and/or user input. The verification check can comprise comparing the storage container and/or the product items to one or more target product items in a customer's order. If it is determined the storage container should be returned, the method can proceed to step 718 where the storage container is returned to the grid. The storage container can be returned to the grid at step 718 in a substantially similar manner to that described for receiving a container in steps 602 and 606, such as but not limited to, via a container handling vehicle and/or port column.

At step 704 of method 700, the method can comprise determining whether to transport a storage container 112 received at a presentation position 510 via any of steps 604, 714, 710 to a buffer position 512, a drop position 502 or to a different presentation position 510 on the conveyor 508. As described for the determinations made at step 702, the determination of step 704 can be based on user input, the position of any storage containers 112 already on the conveyor 508 and/or one or more customer orders. The determination can additionally or alternatively be based on whether there is a storage container waiting at a drop position 502. Basing the determination on one or more customer orders can comprise analysing one or more customer orders to determine one or more frequently required storage containers. The determination can be based on where the storage container was received from, for example, via operation 604, 710 or 714. Determining one or more frequently required storage containers can comprise identifying one or more frequently required product items and identifying the frequently required storage container which stores said product items. Based on identifying a storage container as a frequently required storage container, it may be determined that the storage container should be moved to a buffer position 512 instead of being returned to the grid 100 via a drop position 502. As another example, if it is determined a container in the first presentation position 510a and the first buffer position 512a both need to be presented, the container in the first presentation position 510a may be determined to be moved to a different presentation position 510b to make room for the storage container 112 in the first buffer position 512a. The determination can be performed by a control system and/or processor in the port and/or using a central control system 400 associated with the automated storage and retrieval system. The determination can be performed in response to an indication that the user has finished accessing the container in the presentation position. If it is determined the storage container should be moved to a drop position 502, the method proceeds to operation 706. If it is determined the storage container should be moved to a buffer position 512, the method proceeds to operation 708. If it is determined the storage container should be moved to a different presentation position 510, the method proceeds to operation 710.

The storage container can be moved from a presentation position 510 to a drop position 502 at step 706 in a substantially similar manner to that described for moving a container from the drop position 502 to the presentation position in step 604.

The storage container can be moved from a presentation position 510 to a buffer position 512 at step 708 by actuating at least a portion of the conveyor 508 corresponding to the presentation position 510, towards the buffer position 512. Additionally or alternatively, a storage container 112 can be transferred from a presentation position 510 to a buffer position 512 using the container transfer means 504. For example, if both the first presentation position 510a and the first buffer position 512a are occupied, but the containers in both positions need to be swapped, one of the containers can be temporarily moved from either the first presentation position 510a or the first buffer position 512a using the container transfer means 504 to create space for conveyor movement. Actuating at least a portion of the conveyor 508 corresponding to the presentation position, towards the buffer position 512 can comprise actuating a conveyor panel 514 associated with the presentation position towards a conveyor panel 514 associated with the buffer position. Actuating at least a portion of the conveyor 508 corresponding to the presentation position, towards the buffer position 512 can comprise actuating a conveyor panel 514 associated with the buffer position away from a conveyor panel 514 associated with the presentation position.

The storage container can be moved from a presentation position 510a to a different presentation position 510b at step 710 by actuating at least a portion 514a of the conveyor 508 corresponding to the first presentation position 510a, towards a second presentation position 510b. The storage container can moved from a presentation position 510a to a different presentation position 510b at step 710 in a substantially similar manner to that described for transporting a container in step 708 with the only differences being the positions for which the moment is being made between.

At step 712 of method 700, the method can comprise determining whether to transport a storage container 112 received at a buffer position 512 via steps 608 or 708 to a presentation position 510, or a drop position 502. In some embodiments, storage containers can also be received at a first buffer position 512a from a different buffer position 512b and/or can be determined to be moved from a first buffer position 512a to a different buffer position 512b. The determination to transport a storage container 112 at a buffer position 512 to a presentation position 510, drop position 502 or a different buffer position 512b can be based on the same factors or processes discussed when describing determination steps 702 and/or 704. As one example, if a container is required by a user, it may be determined to be moved from a buffer position 512 to a presentation position 510. If one or more customer orders changes, the frequency the storage container in the buffer position 512 is required may decrease below a threshold amount and in response it may be determined that the storage container should be returned to the grid 100 via a drop position 502. If it is determined the storage container should be moved to a presentation position 510, the method proceeds to operation 714. If it is determined the storage container should be moved to a drop position 502, the method proceeds to operation 716.

The storage container can be moved from a buffer position 512 to a drop position 502 at step 716 in a substantially similar manner to that described for moving a container from a drop position 502 to a buffer position in step 608, with the only differences being the positions for which the moment is being made between.

The storage container can be moved from a buffer position 512 to a presentation position 510 at step 714 in a substantially similar manner to that described for moving a container from a presentation position 510 to a buffer position in step 708, with the only differences being the positions for which the moment is being made between.

Fig. 7 illustrates multiple instances of each method step, signifying that the any one or more of the processes of method 700 can be executed simultaneously. This allows multiple containers to move between positions within the port at any given time, facilitating the sequencing of containers within the port to more efficiently and rapidly present them to a user. It is intended that Fig. 7 and the accompanying description illustrate all possible movement paths for a container 112 within the port 500. However, it will be appreciated that certain operations, processes, or movement paths may be omitted while still falling within the scope of the present disclosure. A subset of the movement paths and operations described in relation to Fig. 7 may be implemented without others of the movement paths and operations, in particular where this still enables efficient movement, storage and/or sequencing of containers through the port as would be understood by the skilled person.

Any of the method steps described herein may be considered to be operations which the relevant devices and systems described herein are configured to perform. Any of the operations the devices and systems are configured to perform as described herein may be considered to be method steps comprised in one or more of the methods described herein.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A port for an automated storage and retrieval system, the port comprising:
one or more drop positions for receipt of respective storage containers from a storage grid of the automated storage and retrieval system;
a conveyor comprising a buffer position and a presentation position and configured to transport the storage containers between the buffer position and the presentation position, wherein the storage containers are accessible to a user when at the presentation position; and
a container transfer means configured to:
transport a first storage container of the storage containers from a first drop position of the one or more drop positions to the presentation position; and
transport a second storage container of the storage containers from the first drop position to the buffer position.

2. The port of claim 1, wherein the conveyor is configured to transport the second storage container from the buffer position to the presentation position.

3. The port of claim 1 or claim 2, wherein the container transfer means is configured to transport the first storage container and/or the second storage container from the presentation position to one of the one or more drop positions for return to the storage grid.

4. The port of any preceding claim, wherein the container transfer means is configured to transport the storage containers from the buffer position to one of the one or more drop positions for return to the storage grid.

5. The port of any preceding claim, wherein the buffer position is disposed between the one or more drop positions and the presentation position.

6. The port of any of claims 1-4, wherein the presentation position and the buffer position are laterally adjacent.

7. The port of any preceding claim, wherein the container transfer means is a transport conveyor system comprising:
a first transport conveyor configured to transport the first storage container between the first drop position and the presentation position; and
a second transport conveyor configured to transport the second storage container between the first drop position and the buffer position.

8. The port of any of claims 1-6, wherein the container transfer means is a mechanical arm configured to engage with the storage containers.

9. The port of claim 8 wherein the mechanical arm is a 3 point articulated mechanical arm.

10. The port of any preceding claim, the conveyor further comprising a second buffer position and a second presentation position, wherein the conveyor is configured to:
transport the storage containers between any of the presentation position, the second presentation position, the buffer position and the second buffer position.

11. The port of any preceding claim, wherein the one or more drop positions comprise a second drop position, and the container transfer means is configured to transport the containers between the second drop position and the buffer position and/or the presentation position.

12. An automated storage and retrieval system, comprising:
a storage grid comprising one or more storage containers stored therein; and
the port of any one of claims 1-11.

13. The automated storage and retrieval system of claim 12, further comprising:
a rail system arranged on top of the storage grid, the rail system comprising a first set of rails and a second set of rails, wherein the rails of the first set of rails extend in a first direction and the rails of the second set of rails extend in a second direction; and
one or more robotic container-handling vehicles, configured to travel along the first and second sets of rails and to transport the one or more storage containers along the top of the storage grid;
wherein the one or more robotic container-handling vehicles are configured to:
lift and lower storage containers in a third direction;
place any one of the one or more storage containers onto the first drop position by lowering said storage container in the third direction through a first port column of the storage grid; and
pick up, through the first port column, a storage container from the first drop position.

14. A method for the transport of storage containers in a port of an automated storage and retrieval system, the method comprising:
receiving, at a first drop position of the port, a first storage container from a storage grid of the automated storage and retrieval system;
transporting, using a container transfer means of the port, the first storage container from the first drop position to a presentation position of a conveyor of the port, wherein the first storage container is accessible to a user at the presentation position;
receiving, at the first drop position, a second storage container from the storage grid;
transporting, using the container transfer means, the second storage container from the first drop position to a buffer position of the conveyor of the port; and optionally,
transporting, using the conveyor, the second storage container from the buffer position to the presentation position.

15. A computer-readable medium comprising instructions which, when executed on one or more processors, cause a port of an automated storage and retrieval system to carry out the method of claim 14.
